# EUROPEAN PATENT APPLICATION

(11) **EP 2 610 133 A1**
(43) Date of publication of application: **03.07.2013**
(21) Application number: 11819765.6
(22) Date of filing: 05.08.2011
(51) Int. Cl.: B62D 5/04, B60G 3/20, B60G 17/015

(54) **STEER-BY-WIRE STEERING SYSTEM**

(30) Priority: 25.08.2010 JP 2010187805
(71) Applicant: NTN Corporation, Osaka-shi, Osaka 550-0003 (JP)
(72) Inventor: YAMAMOTO Tetsuya, Iwata-shi Shizuoka 438-0037 (JP); GOTOU Tomomi, Iwata-shi Shizuoka 438-0037 (JP); TOMODA Kaori, Iwata-shi Shizuoka 438-0037 (JP)
(74) Representative: Grünecker, Kinkeldey, Stockmair & Schwanhäusser
(86) International application number: PCT/JP2011/067935
(87) International publication number: WO 2012/026301

(57) **Abstract**

A wheel-turning device that constitutes a steer-by-wire steering system is made as compact as possible so as to be housed in a wheel house of a vehicle.

The steer-by-wire steering system is provided including a wheel-turning device 13 mechanically separated from a steering input device, the wheel-turning device 13 being controlled based on an input signal from the steering input device, wherein the wheel-turning device 13 includes a wheel-turning motor 15 secured to a knuckle 21 of a steered wheel 14 via a gear case 36, a wheel-turning shaft 20 secured to an upper arm 22, a worm wheel secured to the wheel-turning shaft 20, a worm gear meshing with the worm wheel, and the gear case 36 housing the gears.

## Description

### TECHNICAL FIELD

The present invention relates to a steer-by-wire steering system and a vehicle including the steering system.

### BACKGROUND ART

Generally, a steer-by-wire steering system includes a steering input device, a wheel-turning device mechanically separated from the steering input device, and a control device that controls the wheel-turning device based on an input from the steering input device.

As such a wheel-turning device, a configuration is known in which a ball screw mechanism is driven by a motor as a steering actuator to push and pull a knuckle arm via a tie rod of a steering link mechanism and provide a steering angle to a steered wheel (Patent Literature 1).

### CITATION LIST

### Patent Literature

Patent Literature 1: Japanese Patent Laid-Open No. 2007-326459

### SUMMARY OF INVENTION

### Technical Problem

In the conventional wheel-turning device, the ball screw mechanism and the steering link mechanism are arranged in a direction of an axle of the steered wheel, and thus a space in the direction of the axle needs to be ensured. However, an electric vehicle needs to ensure as large an in-vehicle space as possible because a battery, an inverter, or the like are mounted in a portion corresponding to an engine room of a gasoline vehicle. Thus, the conventional wheel-turning device cannot satisfy the above described demand.

Thus, a first object of the present invention is to make a wheel-turning device as compact as possible in a steer-by-wire steering system so as to be housed in a wheel house.

Also, in the wheel-turning device using the ball screw mechanism as described above, a motor may be rotated from a load side in reverse input from the steered wheel. Thus, to prevent this, the motor needs to be always controlled, which consumes electric power and requires a reverse input preventing mechanism.

Thus, a second object of the present invention is to allow reverse input to be effectively prevented.

### Solution to Problem

To achieve the first object, the present invention provides a steer-by-wire steering system including: a steering input device; a wheel-turning device mechanically separated from the steering input device; and a control device that controls the wheel-turning device based on an input signal from the steering input device, wherein the wheel-turning device includes a wheel-turning actuator secured to a steered wheel coupling member constituted by a knuckle of a steered wheel or a member secured to the knuckle, a wheel-turning shaft secured to an upper arm of a suspension, a fixed gear secured around the wheel-turning shaft, a pinion gear that meshes with the fixed gear and moves around the fixed gear, and a gear case housing the gears, a drive shaft of the wheel-turning actuator is coupled to the pinion gear, the fixed gear is free with respect to the gear case, the pinion gear is supported by the gear case, and the gear case is secured to the steered wheel coupling member.

In the wheel-turning device in the steer-by-wire steering system having the above described configuration, the fixed gear is secured to the wheel-turning shaft, while the fixed gear is free with respect to the gear case, the pinion gear meshing with the fixed gear is supported in the gear case, and the gear case is secured to the steered wheel coupling member together with the wheel-turning actuator. Thus, the pinion gear receives reaction from the fixed gear and rotates by a certain angle around the fixed gear. The steered wheel rotates by a certain steering angle around the wheel-turning shaft integrally with the pinion gear, the gear case, and the wheel-turning actuator via the steered wheel coupling member.

To achieve the second object, the present invention provides the steer-by-wire steering system wherein the fixed gear is a worm wheel, and the pinion gear is a worm gear.

### Advantageous Effects of Invention

As described above, the steer-by-wire steering system according to the present invention includes the wheel-turning device including the wheel-turning actuator, the wheel-turning shaft, the fixed gear, the pinion gear, the gear case, and a constant velocity universal joint as required, and is thus compact and can be housed in a wheel house of a vehicle.

As a specific combination of the fixed gear and the pinion gear, adopting a combination of the worm wheel and the worm gear can eliminate the need to separately provide reduction means and reverse input blocking means in a drive force transmitting path, thereby reducing cost and making the system compact.

### BRIEF DESCRIPTION OF DRAWINGS

Fig. 1A is a block diagram of an outline of a steer-by-wire steering system according to Embodiment 1.
Fig. 1B is a block diagram of a wheel-turning device in Fig. 1A.
Fig. 2 is a front view of a wheel-turning device in Embodiment 1.
Fig. 3 is an enlarged front view, partially in vertical section, of Fig. 2.
Fig. 4 is a sectional view taken along the line X-X in Fig. 3.
Fig. 5 is a front view showing another example of a wheel-turning device.
Fig. 6A is a partially omitted sectional view showing an example of a support structure at a lower end of a wheel-turning shaft.
Fig. 6B is a partially omitted sectional view showing an example of the support structure at the lower end of the wheel-turning shaft.
Fig. 6C is a partially omitted sectional view showing an example of the support structure at the lower end of the wheel-turning shaft.
Fig. 6D is a partially omitted sectional view showing an example of the support structure at the lower end of the wheel-turning shaft.

### DESCRIPTION OF EMBODIMENTS

Now, an embodiment of the present invention will be described with reference to the accompanying drawings.

### [Embodiment 1]

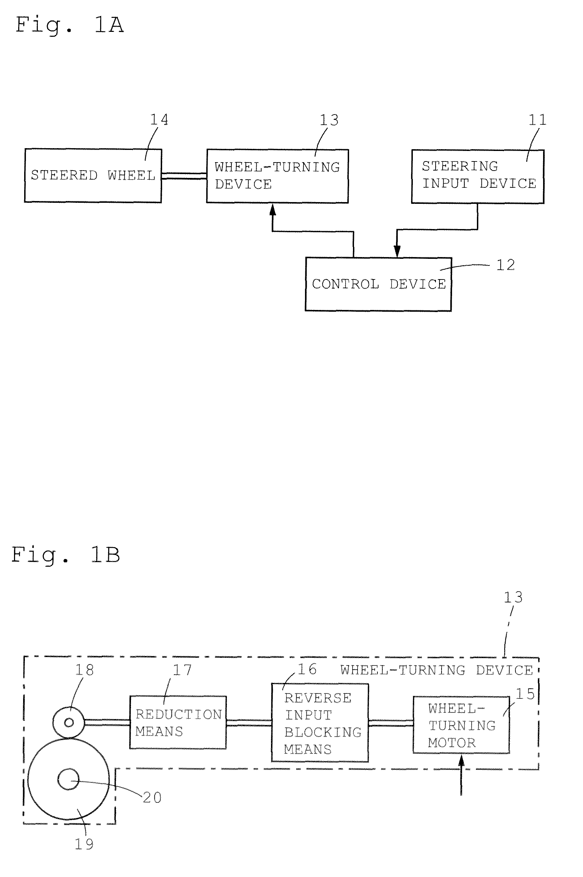

Figs. 1A and 1B show an outline of a steer-by-wire steering system according to Embodiment 1. As shown in Fig. 1A, the system includes a steering input device 11, a control device 12, a wheel-turning device 13, and a steered wheel 14. The steering input device 11 includes a steering wheel and a joystick provided in a vehicle, and converts operation states thereof into wheel-turning signals and inputs the signals to the control device 12. The control device 12 controls the wheel-turning device 13 based on the wheel-turning signals to turn the steered wheel 14.

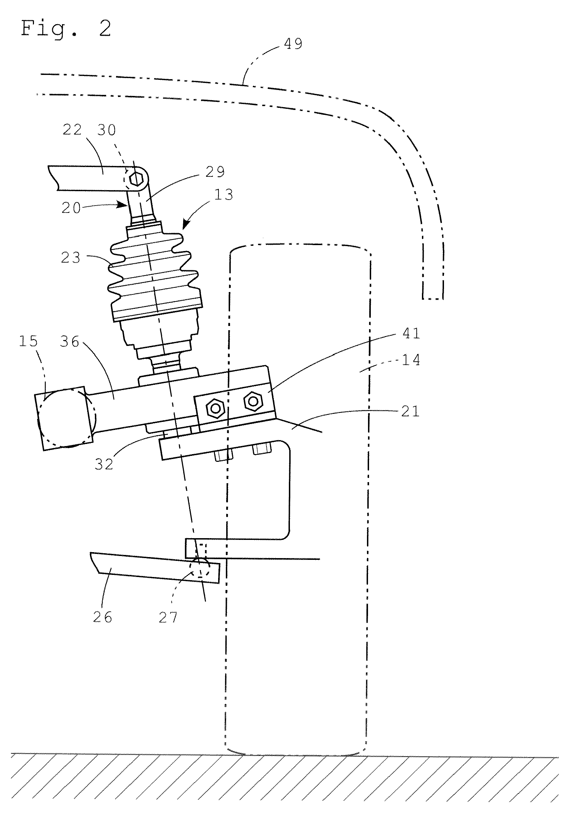

As shown in Fig. 1B, the wheel-turning device 13 includes a wheel-turning motor 15, reverse input blocking means 16, reduction means 17, a pinion gear 18, and a fixed gear 19 meshing with the pinion gear 18, and is coupled to a knuckle 21 (see Fig. 2) secured to the steered wheel 14.

The reverse input blocking means 16 is constituted by a one-way clutch or the like. When the fixed gear 19 is rotated by vibration or the like of the vehicle, the reverse input blocking means 16 prevents torque of the fixed gear 19 from being transmitted to the wheel-turning motor 15 to reversely rotate the wheel-turning motor 15. The reduction means 17 is provided as required to reduce a rotational speed of the wheel-turning motor 15 to a wheel-turning speed. The fixed gear 19 is secured around a wheel-turning shaft 20 of the steered wheel 14.

When the pinion gear 18 and the fixed gear 19 are a worm gear and a worm wheel, these have functions of both the reverse input blocking means 16 and the reduction means 17, and other special reverse input blocking means and reduction means are not required.

The wheel-turning shaft 20 is supported by a suspension of the vehicle, and the wheel-turning device 13 rotates integrally with the steered wheel 14 around the wheel-turning shaft 20 by a certain angle, thereby providing a predetermined steering angle to the steered wheel 14.

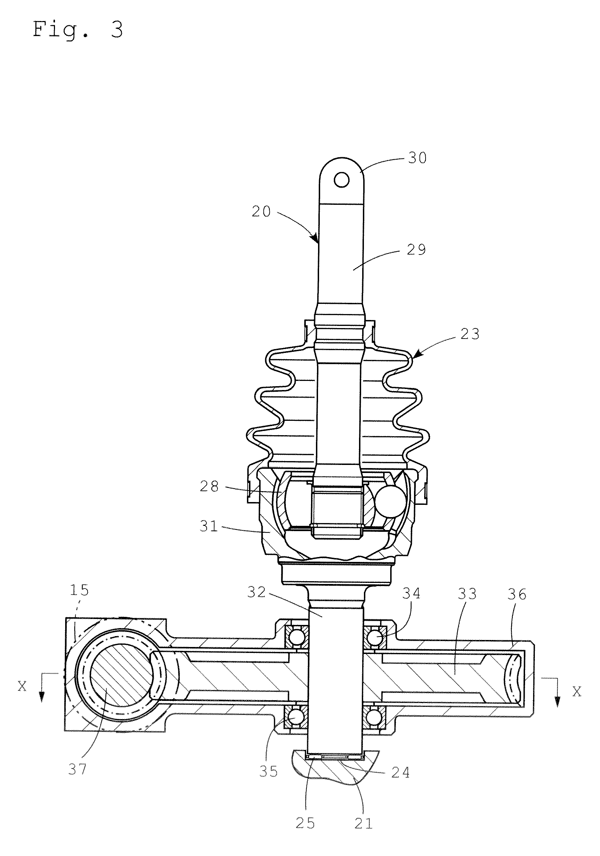

Next, with reference to Figs. 2 to 6, the above described steer-by-wire steering system will be described in more detail. Fig. 2 shows the wheel-turning device 13. The knuckle 21 is secured to a hub of the steered wheel 14 (for example, front wheel). In this case, a suspension of the vehicle is of a double wishbone type, and an upper end of the wheel-turning shaft 20 is secured to a front end of an upper arm 22 with a certain angle of inclination. A universal joint, in the shown case, a constant velocity universal joint 23 is provided in a middle of the wheel-turning shaft 20, and a lower end (free end) of the wheel-turning shaft 20 is inserted into a recess 24 (see Fig. 3) provided in the knuckle 21 via a thrust bearing 25.

A lower arm 26 of the suspension is coupled to the knuckle 21 via a ball joint 27 at an intersection between an extended line from the lower end of the wheel-turning shaft 20 and the knuckle 21 (see Fig. 2).

As shown in Fig. 3, the constant velocity universal joint 23 includes an inner joint member shaft 29 coupled to a center of an inner joint member 28, and an outer joint member shaft 32 coupled to a center of an outer joint member 31. The shafts 29, 32 are concentrically placed, and together constitute the above described wheel-turning shaft 20.

The inner joint member shaft 29 has, at an upper end, a fixed joint 30 secured to the upper arm 22 (see Fig. 2). A lower end of the outer joint member shaft 32 is inserted into the recess 24 in the knuckle 21. When a vehicle body tilts, the upper arm 22 of the suspension and the inner joint member shaft 29 secured to the upper arm 22 tilt integrally with the vehicle body, but an action of the constant velocity universal joint 23 minimizes a tilt of the outer joint member shaft 32, and absorbs an effect of the tilt of the vehicle body. To fulfill the above described function, backlash in the constant velocity universal joint 23 is desirably minimized.

A worm wheel 33 as an example of the fixed gear 19 is inserted through and secured to a middle of the outer joint member shaft 32. The worm wheel 33 is housed in a gear case 36, and the gear case 36 is rotatably mounted to the outer joint member shaft 32 via bearings 34, 35.

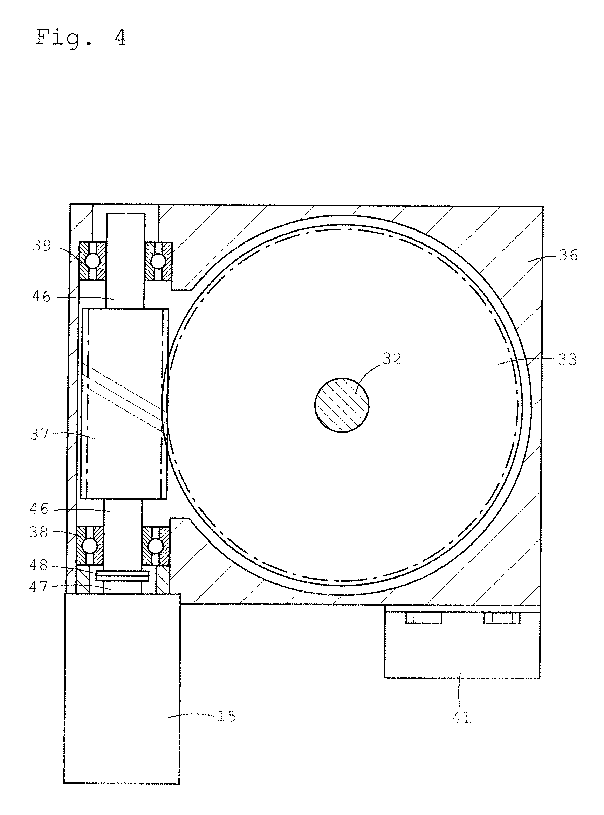

A worm gear 37 as an example of the pinion gear 18 is also housed in the gear case 36, and opposite end shaft portions 46, 46 thereof are rotatably supported in the gear case 36 by bearings 38, 39 (see Fig. 4).

The wheel-turning motor 15 is secured to a part of the gear case 36, and a drive shaft 47 thereof is coupled to the worm gear 37 via a coupling 48. The gear case 36 is secured to the knuckle 21 via a bracket 41. The wheel-turning motor 15 is indirectly secured to the knuckle 21 via the gear case 36. A member coupled and secured to the steered wheel 14 such as the knuckle 21 and the gear case 36 secured thereto is referred to as a steered wheel coupling member 50.

As shown in Fig. 2, the wheel-turning device 13 having the above described configuration is made compact so as to be housed inside a fender 49 of the vehicle, a so-called wheel house.

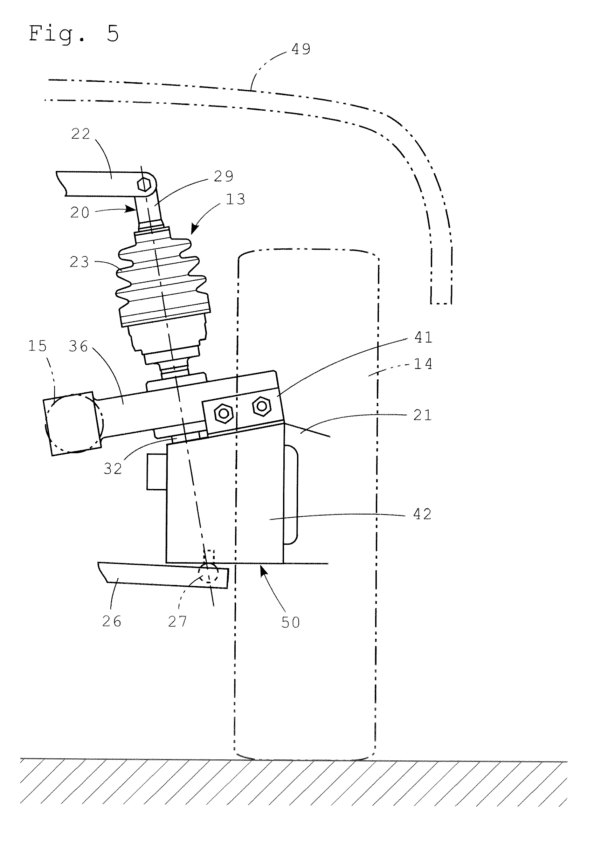

As shown in Fig. 5, for a vehicle in which an IWM (in-wheel motor) 42 is secured to the knuckle 21, the gear case 36 may be secured to a housing of the IWM 42 via the bracket 41. In this case, the housing of the IWM 42 is the steered wheel coupling member 50.

Since the combination of the worm wheel 33 and the worm gear 37 have a function of blocking reverse input from the worm wheel 33 and a function of reducing speed, there is no need to separately provide the reduction means 17 and the reverse input blocking means 16. When a spur gear, a helical gear, and a bevel gear are used as the fixed gear 19 and the pinion gear 18 instead of the combination of the worm wheel 33 and the worm gear 37, separately adopting a reducer and a reverse input blocking clutch is considered to support the above described functions. As the reducer, a reducer having a low backlash function, for example, a harmonic drive reducer, or a cycloid reducer can be used.

When a reduction ratio between the pinion gear 18 and the fixed gear 19 is relatively large, a small motor of a high-speed low-torque type may be used as the wheel-turning motor 15.

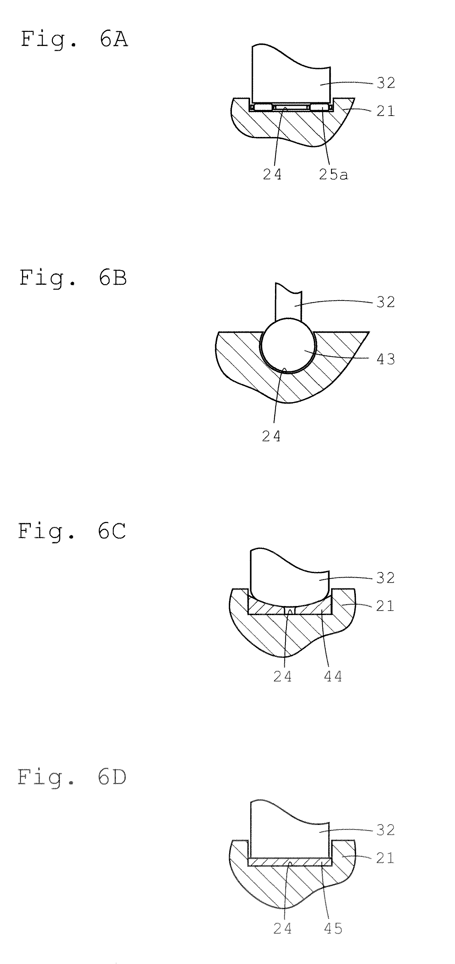

With reference to Figs. 6A to 6D, other examples of the lower end of the outer joint member shaft 32, that is, an abutment structure at the lower end of the outer joint member shaft 32 will be described.

Figs. 6A to 6D show examples of a structure in which the lower end of the outer joint member shaft 32 is abutted against the recess 24 in the knuckle 21 via the thrust bearing 25. The drawings show the case where the recess 24 is provided in the knuckle 21, but not limited to the knuckle 21, the recess 24 may be provided in a different steered wheel coupling member 50.

Fig. 6A shows an example of placing a thrust needle bearing 25a in the recess 24, Fig. 6B shows an example of providing a ball joint 43 at a lower end of the outer joint member shaft 32, Fig. 6C shows an example of placing a spherical bush 44, and Fig. 6D shows an example of placing a sliding member 45. The sliding member 45 includes copper, copper-based metal, sintered metal, a member with a modified surface (a member with a sliding material such as PTFE being dispersed in electroless Ni, a member having a DLC film, or the like), a resin member in which a solid lubricant (molybdenum disulfide, graphite, PTFE) is dispersed, a resin member in which reinforcement fiber (carbon fiber, glass fiber) or whisker is dispersed, or the like.

The steer-by-wire steering system according to Embodiment 1 and the vehicle using the same have the configurations as described above. Next, a steering action thereof will be described.

When the wheel-turning motor 15 of the wheel-turning device 13 is driven via the control device 12 based on the wheel-turning signal input from the steering input device 11, the worm gear 37 shown in Figs. 2 to 4 is driven. The worm gear 37 receives reaction from the vehicle body via the worm wheel 33 meshing with the worm gear 37, the wheel-turning shaft 20 to which the worm wheel 33 is secured, and a suspension such as the upper arm to which the wheel-turning shaft 20 is secured, and then the worm gear 37, the gear case 36 that supports the worm gear 37, the wheel-turning motor 15, the knuckle 21, and the steered wheel 14 integrally rotate around the wheel-turning shaft 20 by a certain angle, thereby providing a steering angle to the steered wheel 14.

In the above described action, the rotational speed of the wheel-turning motor 15 is reduced to a desired wheel-turning speed at the worm gear 37 and the worm wheel 33. Even if the steered wheel 14 vibrates or torque acts around the wheel-turning shaft 20 to apply reverse input torque to the wheel-turning shaft 20, transmission of the reverse input torque is blocked and transmission to the wheel-turning motor 15 is prevented in terms of the nature of the worm gear 37 and the worm wheel 33.

For the combination of gears without such functions, a reducer and a reverse input blocking clutch need to be separately provided between the wheel-turning motor 15 and the pinion gear 18 (see Fig. 1B).

**REFERENCE SIGNS LIST**

| | |
|---|---|
| 11 | steering input device |
| 12 | control device |
| 13 | wheel-turning device |
| 14 | steered wheel |
| 15 | wheel-turning motor |
| 16 | reverse input blocking means |
| 17 | reduction means |
| 18 | pinion gear |
| 19 | fixed gear |
| 20 | wheel-turning shaft |
| 21 | knuckle |
| 22 | upper arm |
| 23 | constant velocity universal joint |
| 24 | recess |
| 25 | thrust bearing |
| 25a | thrust needle bearing |
| 26 | lower arm |
| 27 | ball joint |
| 28 | inner joint member |
| 29 | inner joint member shaft |
| 30 | fixed joint |
| 31 | outer joint member |
| 32 | outer joint member shaft |
| 33 | worm wheel |
| 34 | bearing |
| 35 | bearing |
| 36 | gear case |
| 37 | worm gear |
| 38 | bearing |
| 39 | bearing |
| 41 | bracket |
| 42 | IWM |
| 43 | ball joint |
| 44 | spherical bush |
| 45 | sliding member |
| 46 | shaft portion |
| 47 | drive shaft |
| 48 | coupling |
| 49 | fender |
| 50 | steered wheel coupling member |

## Claims

1. A steer-by-wire steering system comprising: a steering input device; a wheel-turning device mechanically separated from the steering input device; and a control device that controls the wheel-turning device based on an input signal from the steering input device, wherein the wheel-turning device includes a wheel-turning actuator secured to a steered wheel coupling member constituted by a knuckle of a steered wheel or a member secured to the knuckle, a wheel-turning shaft secured to an upper arm of a suspension, a fixed gear secured around the wheel-turning shaft, a pinion gear that meshes with the fixed gear and moves around the fixed gear, and a gear case housing the gears, a drive shaft of the wheel-turning actuator is coupled to the pinion gear, the fixed gear is free with respect to the gear case, the pinion gear is supported by the gear case, and the gear case is secured to the steered wheel coupling member.

2. The steer-by-wire steering system according to claim 1, wherein a universal joint is provided in a middle of the wheel-turning shaft.

3. The steer-by-wire steering system according to claim 2, wherein the universal joint is a constant velocity universal joint.

4. The steer-by-wire steering system according to any one of claims 1 to 3, wherein the wheel-turning actuator is a motor.

5. The steer-by-wire steering system according to any one of claims 1 to 4, wherein the fixed gear is any one of a worm wheel, a spur gear, a helical gear, and a bevel gear.

6. The steer-by-wire steering system according to any one of claims 1 to 5, wherein the steered wheel coupling member includes a housing of an in-wheel motor secured to the knuckle.

7. The steer-by-wire steering system according to any one of claims 1 to 6, wherein a free end of the wheel-turning shaft is inserted into a recess provided in the steered wheel coupling member via a bearing member, and the steered wheel coupling member rotatably abuts against the wheel-turning shaft together with the steered wheel.

8. The steer-by-wire steering system according to claim 7, wherein the bearing member is a thrust bearing.

9. The steer-by-wire steering system according to claim 7, wherein the bearing member is a ball joint.

10. The steer-by-wire steering system according to claim 7, wherein the bearing member is a thrust spherical bush.

11. The steer-by-wire steering system according to claim 7, wherein the bearing member is a sliding member.

12. The steer-by-wire steering system according to any one of claims 1 to 11, wherein reverse input blocking means is provided between the drive shaft of the wheel-turning actuator and the pinion gear.

13. The steer-by-wire steering system according to claim 12, wherein the reverse input blocking means is a reverse input blocking clutch.

14. The steer-by-wire steering system according to claim 12, wherein the reverse input blocking means includes the fixed gear constituted by a worm wheel, and the pinion gear constituted by a worm gear.

15. The steer-by-wire steering system according to any one of claims 1 to 14, wherein a drive force of the wheel-turning actuator is transmitted to the pinion gear via reduction means.

16. The steer-by-wire steering system according to claim 15, wherein the worm gear and the worm wheel that constitute the reverse input blocking means also serve as the reduction means.

17. The steer-by-wire steering system according to claim 15 or 16, wherein the reduction means is a low backlash reducer such as a harmonic drive reducer, or a cycloid reducer.

18. A vehicle comprising a steer-by-wire steering system according to any one of claims 1 to 17.

19. The vehicle comprising a steer-by-wire steering system according to claim 18, wherein the suspension is of a double wishbone type.
